# EUROPÄISCHE PATENTANMELDUNG

(11) **EP 3 819 104 A1**
(43) Veröffentlichungstag der Anmeldung: **12.05.2021**
(21) Anmeldenummer: 19207386.4
(22) Anmeldetag: 06.11.2019
(51) Int. Cl.: B29C 70/46, B29C 70/54, B29C 70/56, B29C 33/38, B29C 51/30, A45C 5/02

(54) **VERFAHREN ZUR HERSTELLUNG EINES BAUTEILS UND BEHÄLTER MIT ZUMINDEST EINEM DERARTIG HERGESTELLTEN BAUTEIL**

(71) Anmelder: Vocier GmbH, 2700 Wiener Neustadt (AT)
(72) Erfinder: KOGELNIK, Michael, 2700 Wiener Neustadt (AT)
(74) Vertreter: Sonn & Partner Patentanwälte

(57) **Zusammenfassung**

Ein Verfahren zur Herstellung eines zumindest abschnittsweise gekrümmten Bauteils (1) aus einer Kunststoffverbundplatte (2) durch Pressen, mit den Schritten: Bereitstellen einer Kunststoffverbundplatte (2), Erwärmen der Kunststoffverbundplatte (2), Aufnehmen und Pressen der erwärmten Kunststoffverbundplatte (2) in einer Pressvorrichtung (8), Abkühlen der in der Pressvorrichtung (8) aufgenommenen und gepressten Kunststoffverbundplatte (2) und Öffnen der Pressvorrichtung (8) und Entnehmen der verfestigten zumindest abschnittsweise gekrümmten Kunststoffverbundplatte (2) als Bauteil (1) aus der Pressvorrichtung (8) und auch einen Behälter (23), insbesondere Koffer (23a), mit zumindest einem halbschalenförmigen Bauteil (24), welcher mit einem solchen Verfahren hergestellt ist.

## Beschreibung

Die Erfindung betrifft ein Verfahren zur Herstellung eines zumindest abschnittsweise gekrümmten Bauteils aus einer Kunststoffverbundplatte durch Pressen.

Die Erfindung betrifft weiters einen Behälter, insbesondere Koffer, mit zumindest einem halbschalenförmigen Bauteil, welcher mit einem solchen Verfahren hergestellt ist.

Die Herstellung zumindest abschnittsweise gekrümmter Bauteile, wie bspw. Koffer oder anderer Behälter aus Fasermatten die bspw. Carbon enthalten oder allgemein aus Prepreg Material, ist bekannt. Dabei erfordern bekannte Herstellungsprozesseeine Vielzahl von personal- und kostenaufwändigen Prozessschritten. Insbesondere wird das Fasermaterial zusammen mit weiteren für die Herstellung nötigen Schichten sorgfältig von Hand in entsprechende Pressformen eingelegt. Die Schichten werden anschließend unter Druck bzw. Vakuum in einem Autoklaven für mehrere Stunden ausgehärtet.

Die US 2010/0181018 A1 betrifft die Herstellung von Verbundbauteilen in Pressformen unter erhöhter Temperatur. Hierfür werden typischerweise mehrere , zunächst weiche Schichten von gewebten oder unidirektionalen Fasern, welche typischerweise bereits getränkt in einer Matrix aus duroplastischem, also nicht durch Wärme erweichbarem Kunststoff (kurz: "Prepregs") geliefert werden, auf eine Oberfläche einer starren heizbaren Pressform gelegt. Das Verbundlaminat wird mit einem Entlüftungstuch bedeckt, durch welches, unterstützt durch Anlegen eines Unterdrucks, überschüssiges Gas und duroplastisches Harz während des Formens entweichen können. Zum Formen wird eine Basis-Pressform aus thermisch isolierendem Material mit einer dem Verbundlaminat zugewandten Silikonschicht gegen das Verbundlaminat gepresst. Die Verteilung der Dicke dieser Silikonschicht wird vorab berechnet, um eine gleichmäßige Druckverteilung auf das Verbundlaminat zu erzielen. Die Pressformen werden dann geschlossen und es wird die Luft mittels Vakuumvorrichtungen abgesaugt. Auch werden die Pressformen erhitzt, so dass das vormals weiche, verformbare Verbundlaminat mit duroplastischer Matrix aushärtet und dadurch steif und fest wird. Die Aushärtung duroplastischer Materialien dauert üblicherweise mehrere Stunden.

Die bekannten Verfahren sind somit zeit- und kostenintensiv. Es entstehen dabei Bauteile mit duroplastischer Matrix, welche dadurch zwar sehr steif, aber auch relativ spröde werden.

Aufgabe der Erfindung ist die Schaffung eines Verfahrens der eingangs genannten Art, mit welchem der Bauteil rasch und möglichst automatisiert, mit geringem Gewicht und hoher Festigkeit hergestellt werden kann. Nachteile bekannter Verfahren sollen verhindert oder zumindest reduziert werden. Es ist zudem Aufgabe der Erfindung einen Behälter oder eine Schale, insbesondere Koffer, zu schaffen, der zumindest einen mit einem solchen Verfahren hergestellten halbschalenförmigen Bauteil aufweist.

Gelöst wird die erfindungsgemäße Aufgabe durch ein oben genanntes Herstellungsverfahren, das die folgenden Schritte aufweist:
- Bereitstellen einer im Lieferzustand harten Kunststoffverbundplatte, welche zumindest eine Fasermatte mit zumindest einem von Carbonfasern, Aramidfasern oder Glasfasern aufweist, welche Fasermatte in einer Matrix aus thermoplastischem Material gebunden ist;
- Erwärmen der Kunststoffverbundplatte mit einer Erwärmungsvorrichtung auf eine Erweichungs-Temperatur;
- Aufnehmen und Pressen der auf die Erweichungs-Temperatur erwärmten Kunststoffverbundplatte in einer Pressvorrichtung, zwischen einer ersten Pressform der Pressvorrichtung und einer darauf zu und davon weg bewegbaren zweiten Pressform der Pressvorrichtung, wobei die Pressformen einander zugewandte, beim Pressen zur Anlage an der Kunststoffverbundplatte vorgesehene Pressflächen aufweisen, die erste und zweite Pressform Materialien unterschiedlicher Härte aufweisen und in zumindest einem Teilbereich der Pressfläche der ersten und/oder zweiten Pressform das weichere Material vorgesehen ist;
- Abkühlen der in der Pressvorrichtung aufgenommenen und gepressten Kunststoffverbundplatte auf eine Verfestigungs-Temperatur, welche geringer als die Erweichungs-Temperatur ist; und
- Öffnen der Pressvorrichtung und Entnehmen der verfestigten zumindest abschnittsweise gekrümmten Kunststoffverbundplatte als Bauteil aus der Pressvorrichtung zur eventuell möglichen weiteren Verarbeitung wie Beschneidung der Kanten, Bohren von Löchern und dergleichen.

Der Bauteil wird somit durch Umformen einer Kunststoffverbundplatte hergestellt. Dabei wird unter einer Kunststoffverbundplatte eine Platte mit Fasermaterial und einem Bindemittel verstanden, welches abhängig von einer darauf einwirkenden Temperatur erweicht und ausgehärtet werden kann. Im ausgehärteten Zustand der Kunststoffverbundplatte sind die Fasern im Bindemittel fixiert und verleihen der Kunststoffverbundplatte entsprechende Festigkeit und Stabilität Die Kunststoffverbundplatte wird vor der Ausführung des erfindungsgemäßen Verfahrens hergestellt und kann somit für die Verwendung im Verfahren günstige Eigenschaften aufweisen. Insbesondere kann die Kunststoffverbundplatte mit hinreichend wenig Lufteinschlüssen bereitgestellt werden, sodass beim Umformen der Kunststoffverbundplatte auf ein Entlüftungstuch und das Aufbringen eines Unterdrucks verzichtet werden kann. Die Kunststoffverbundplatte kann eckig, bspw. rechteckig oder quadratisch, oder in speziellen zweidimensionalen vorgeschnittenen Formenausgebildet sein.

Die im erfindungsgemäßen Verfahren verwendete Kunststoffverbundplatte weist zumindest eine Fasermatte mit Carbonfasern und/oder Aramidfasern und/oder Glasfasern auf. Zudem ist die Fasermatte in einer Matrix aus thermoplastischem Material gebunden, welches bei Raumtemperatur fest ist und durch Erwärmung weich wird. Somit wird die Kunststoffverbundplatte bei der Ausführung des Verfahrens vor dem Erwärmen in einem im Wesentlichen festen, d.h. unflexiblen Zustand bereitgestellt und ist daher einfach zu transportieren und zu handhaben. In diesem Zustand ist die Kunststoffverbundplatte für ein Auflegen auf eine Pressfläche der Pressvorrichtung zu wenig flexibel. Vorzugsweise wird thermoplastisches Polyurethan, Polypropylen oder Polyamid oder Polycarbonat als thermoplastisches Material verwendet. Beispielsweise weist die Kunststoffverbundplatte Carbonfasern und Aramidfasern in thermoplastischem Polyamid auf. Das thermoplastische Material (Polyurethan, Polyamid, Polypropylen, Polycarbonat und dergleichen) kann zudem transparent sein. Es kann auch bereits eingefärbt sein, sofern man einen gefärbten Bauteil herstellen will oder die Fasern unsichtbar machen will.

Um die Kunststoffverbundplatte geeignet durch Pressen umformen zu können, wird die Kunststoffverbundplatte mit einer Erwärmungsvorrichtung auf eine Erweichungs-Temperatur erwärmt. Die Erweichungs-Temperatur ist somit eine Temperatur bei welcher die Kunststoffverbundplatte weich genug ist, um durch Verpressen in der Pressvorrichtung verformt zu werden. Die Erweichungs-Temperatur liegt hierfür in einem Temperaturbereich, in welchem die Kunststoffverbundplatte, insbesondere das thermoplastische Material, ihre/seine starre Eigenschaft verliert und eine geeignete höhere Flexibilität erreicht. Ein günstiger Wert der Erweichungs-Temperatur hängt somit von mehreren Parametern, wie der Materialzusammensetzung, der gewünschten Verformung und der Dicke der Kunststoffverbundplatte ab und kann durch einen Fachmann ohne Probleme ermittelt werden. Erfahrungsgemäß ist es sinnvoll, die Kunststoffverbundplatte in Bereichen die stark verformt werden müssen auch stärker zu erwärmen, und umgekehrt Bereiche die weniger verformt werden müssen weniger stark zu erwärmen. Diese unterschiedlichen Erwärmungen können über die Auswahl und Anordnung von Wärmequellen, bspw. Infrarotlampen erfolgen. Alternativ oder ergänzend können auch Hitzeschilder, also Materialien die dazu geeignet sind die Infrarotstrahlung zu vermindern, vor Bereichen der Kunststoffplatten angeordnet sein. Nachdem die Kunststoffverbundplatte auf die Erweichungs-Temperatur erwärmt wurde, wird die Kunststoffverbundplatte in einer Pressvorrichtung, zwischen einer ersten Pressform der Pressvorrichtung und einer darauf zu und davon weg bewegbaren zweiten Pressform der Pressvorrichtung aufgenommen und gepresst. Die Pressformen weisen hierfür einander zugewandte, zumindest abschnittsweise gekrümmte Pressflächen auf, die beim Pressen der Kunststoffverbundplatte an gegenüberliegenden Oberflächen der Kunststoffverbundplatte anliegen. Die Pressformen bzw. deren Pressflächen verleihen somit der dazwischen aufgenommenen und gepressten Kunststoffverbundplatte die angestrebte Form des Bauteils. Der Druck mit welchem die erste und die zweite Pressform gegeneinander und somit auf die Kunststoffverbundplatte drücken kann durch einen Fachmann ohne Probleme ermittelt werden.

Bekannte Pressformen sind häufig aus Stahl oder Aluminium gefertigt. Demgegenüber werden in dem erfindungsgemäßen Verfahren die erste und zweite Pressform mit Materialien unterschiedlicher Härte bereitgestellt. Vorzugsweise weisen die erste und/oder die zweite Pressform zwei Materialien unterschiedlicher Härte auf. Dabei ist das vergleichsweise weichere Material in zumindest einem Teilbereich der Pressfläche der ersten und/oder zweiten Pressform vorgesehen. Wenn die erste oder zweite Pressform mehr als zwei Materialien unterschiedlicher Härte aufweisen, wird unter dem weicheren Material das vergleichsweise weichste der Materialien verstanden, weshalb im weiteren Verlauf der Beschreibung nur mehr auf ein weicheres Material Bezug genommen wird. Somit drückt beim Pressen der Kunststoffverbundplatte das weichere Material der ersten und/oder zweiten Pressform gegen die ebenfalls weiche Kunststoffverbundplatte. Die Härte des weicheren Materials wird so gewählt, dass die sich in Pressung befindliche Kunststoffverbundplatte das weichere Material verformen kann. Dies ist ein bedeutender Unterschied zu im Wesentlichen starren Pressformen und Pressflächen aus Stahl oder Aluminium.

Der besondere Vorteil der Pressform(en) mit weicherem Material ist, dass hierdurch das vergleichsweise weichere Material der Pressformen der sich in Pressung befindlichen Kunststoffverbundplatte einen Toleranzbereich zur Verfügung stellt, in welchen sich die Kunststoffverbundplatte ausdehnen oder verschieben oder freier verformen kann, und so im wesentlichen eine Form annehmen kann, die nicht exakt jener der Pressform entspricht beziehungsweise sanfter in die gewünschte Form gleitet. Auf diese Weise wird der Kunststoffverbundplatte innerhalb gewisser Toleranzen erlaubt, sich sozusagen selbst eine materialgerechte Form zu finden und sich sanfter in diese Form zu finden. Demnach wirkt nicht notwendiger Weise ein gleich verteilter Druck auf die in Pressung befindliche Kunststoffverbundplatte. Vielmehr ist der durch das weichere Material der Pressform auf die Kunststoffverbundplatte ausgeübte Druck geringer als der durch allfälliges härteres Material der Pressform auf die Kunststoffverbundplatte ausgeübter Druck. Je nach Ausbildung und Anordnung des weicheren Materials kann der Druck auf unterschiedliche Bereiche der Kunststoffverbundplatte verschieden sein. Auf diese Weise werden Schäden, bspw. Knitter oder Risse, an der Kunststoffverbundplatte in dem zumindest einen Teilbereich der Pressfläche, in welchem das weichere Material vorgesehen ist, vermieden, denn das Material kann den vom weichen Material erlaubten Toleranzbereich nutzen, um sanfter in eine ähnliche, aber nicht notwendigerweise exakt gleiche Form zu finden.

Im Falle von ausschließlich harten Pressflächen der Pressformen sind hingegen solche Schäden wahrscheinlich, denn das Material wird ohne Toleranzbereich zu stark gedehnt oder zu stark gepresst, so dass es sich in Falten legt oder reißt Dies ist besonders bei engeren Radien, Kanten und Ecken, insbesondere bei mehrfach gekrümmten Flächen wie beispielsweise Kofferecken der Fall.

Dass die erste und zweite Pressform Materialien unterschiedlicher Härte aufweisen schließt die Fälle ein, in welchen sich das Material der ersten Pressform vom Material der zweiten Pressform in der Härte unterscheidet, oder sowohl die erste Pressform als auch die zweite Pressform zwei Materialien unterschiedlicher Härte aufweisen oder nur die erste oder die zweite Pressform Materialien unterschiedlicher Härte aufweisen. Beispielsweise kann eine der beiden Pressformen aus Stahl und die andere Pressform aus Stahl und einem wesentlich weicheren Material, beispielsweise Silikon, an der Pressfläche bestehen.

Während und/oder nach dem Pressen der Kunststoffverbundplatte wird die noch in der Pressvorrichtung aufgenommene und bereits gepresste Kunststoffverbundplatte auf eine Verfestigungs-Temperatur, welche geringer als die Erweichungs-Temperatur ist, abgekühlt. Während der Abkühlung der Kunststoffverbundplatte kann der Pressdruck angepasst werden, solange sichergestellt ist, dass die durch das Pressen hergestellt Form der Kunststoffverbundplatte, d.h. die Form des Bauteils, während der Abkühlung beibehalten wird. Die Verfestigungs-Temperatur liegt hierfür in einem Temperaturbereich, in welchem die Kunststoffverbundplatte wieder ihre feste Eigenschaft, insbesondere aber hohe Steifigkeit und hohe Bruchdehnung, also hohe Formstabilität annimmt. Ein günstiger Wert der Verfestigungs-Temperatur hängt von mehreren Parametern, wie der Materialzusammensetzung und der Dicke der Kunststoffverbundplatte ab und kann durch einen Fachmann ohne Probleme ermittelt werden. Der Abkühlvorgang kann wenige Minuten, insbesondere weniger als 5 Minuten, vorzugsweise weniger als 3 Minuten, andauern.

Um eine möglichst ansprechende Oberfläche des Bauteils zu erhalten, ist es günstig, die Temperatur der Form zu regeln. So ist es zu Beginn sinnvoll, die Temperatur der Pressform eher hoch zu halten, damit das thermoplastische Material an der Oberfläche der Pressform schön weich gehalten wird und sozusagen an der Oberfläche anschmilzt. Somit wird die Form zu Beginn des Zyklus günstiger Weise erhitzt, und danach gekühlt. Das Erhitzen und Kühlen kann mit Wasser, Dampf, Öl, elektrisch und so weiter erfolgen, es handelt sich hierbei um allseits bekannte Methoden.

Nach dem Abkühlen der Kunststoffverbundplatte auf die Verfestigungs-Temperatur wird die Pressvorrichtung geöffnet und die verfestigte, zumindest abschnittsweise gekrümmte Kunststoffverbundplatte als Bauteil aus der Pressvorrichtung entnommen.

Mit dem erfindungsgemäßen Verfahren wird die Zykluszeit im Vergleich zu bekannten Methoden zur Herstellung eines Bauteils von mehreren Stunden auf typischerweise wenige Minuten verkürzt. Das Bauteil erhält dabei eine der Pressform ähnliche Form, aber in wählbaren Bauteilabschnitten wird dem Material bewusst eine Toleranz, welche durch die Dicke und Härte des weichen Pressbereichs kontrolliert wird, erlaubt. Erst durch diese Toleranz sind bestimmte komplexere Formen, wie beispielsweise mehrfachgekrümmte Flächen möglich. Unter mehrfach-gekrümmten Flächen verstehen wir Flächen, die beispielsweise nicht nur entlang einer Achse gekrümmt sind (beispielsweise ein Rohr), sondern gleichzeitig auch entlang zumindest einer zweiten Achse (beispielsweise die abgerundete Ecke eines Quaders oder "Kofferecken"). Besonders wenn die mehrfach-gekrümmten Flächen in engeren Radien vorliegen, hilft die Toleranz in den Pressformen bei der fehlerfreien Realisierung des Bauteils.

Durch die Verwendung von thermoplastischen Kunststoffen wird somit aus einer vorgefertigten Kunststoffverbundplatte durch Umformen ein Bauteil geschaffen, der hohe Festigkeit und hohe Bruchdehnung bei gleichzeitig geringem Gewicht aufweist. Dies wird auch durch den geeigneten Aufbau der Kunststoffverbundplatte gewährleistet. Thermoplastische Kunststoffe sind typischerweise leichter (Dichte 1-1,2 Gramm je Kubikzentimeter) als duroplastische (Dichte 1,2-1,5 Gramm je Kubikzentimeter) Kunststoffe. Zudem besitzen Thermoplaste eine höhere Bruchdehnung von beispielsweise mehr als 20%, während Duroplaste oft lediglich 3% erreichen. Somit bricht die Verbundplatte mit Thermoplasten erst bei einer deutlich größeren Verformung. Auch die Schlagzähigkeit von Thermoplasten ist jenen von Duroplasten überlegen. Die Fasern in der Verbundplatte wiederum erhöhen deren Steifigkeit und Zähigkeit. Aramidfasern sind typischerweise sehr zäh, während Carbonfasern eher steif sind. Der Aufbau der Verbundplatte kann mit einer geeigneten Kombination aus verschiedenen Faserarten, verschiedenen Fasermaterialien und einer unterschiedlichen Anzahl von Lagen und Dicken von Fasern optimiert werden. Da die Kunststoffverbundplatte bzw. der Bauteil nicht in einem Ofen über längere Zeit ausgehärtet bzw. verfestigt werden muss, kann der Bauteil besonders rasch gefertigt werden. Zudem entfällt ein zeitaufwändiges manuelles Einlegen von mehreren Schichten in eine Pressform, da die in der Pressvorrichtung aufzunehmende Kunststoffverbundplatte bereits fertig angeliefert wird.

Gemäß einer bevorzugten Ausführungsform des Verfahrens wird die Kunststoffverbundplatte mit einer Dicke von weniger als 3 mm, vorzugsweise weniger als 1 mm bereitgestellt. Beispiele wird die Kunststoffverbundplatte mit einer Dicke zwischen 0,5 mm und 1 mm bereitgestellt. Auf Grund der geringen Dicke kann die Kunststoffverbundplatte und somit auch der daraus hergestellte Bauteil geringes Gewicht aufweisen. Im Gegensatz hierzu werden bisher bekannte Carbonbauteile vergleichbarer Form mit größerer Dicke hergestellt, um den Nachteil der sehr geringen Bruchdehnung von Duroplasten wettzumachen und eine ausreichend hohe Festigkeit zu erzielen, wodurch jedoch das Gewicht des Bauteils ungünstiger Weise zunimmt und damit der Vorteil des geringen Gewichts von Carbon im Vergleich zu anderen Materialien zumindest teilweise wieder zunichte gemacht wird. Im Vergleich zu Verbundplatten aus Carbon in einer Matrix aus duroplastischem Kunststoff, kann die Dicke der im erfindungsgemäßen Verfahren verwendeten Kunststoffverbundplatte auf Grund der höheren Bruchdehnung und der höheren Schlagzähigkeit z.B. die Hälfte, ein Drittel oder weniger betragen. Die Kunststoffverbundplatte kann vor der Aufnahme in der Pressvorrichtung konstante Dicke aufweisen. Beispielsweise weist die Kunststoffverbundplatte eine Fläche im Bereich von 0,2 m² bis 10 m² auf.

Um beim Herstellungsverfahren möglichst wenig manuelle Handgriffe vornehmen zu müssen, ist es günstig, wenn die Kunststoffverbundplatte vor dem Erwärmen in einer Haltevorrichtung aufgenommen und hiermit der Erwärmungsvorrichtung und der Pressvorrichtung zugeführt wird. Die Haltevorrichtung kann hierfür mehrere Komponenten zum Ergreifen und Transportieren der Kunststoffverbundplatte aufweisen. Die Kunststoffverbundplatte kann bevorzugt mit der Haltevorrichtung ergriffen, der Erwärmungsvorrichtung zugeführt, während der Erwärmung in der Erwärmungsvorrichtung gehalten und im erwärmten Zustand in die Pressvorrichtung in einer geeigneten Position eingebracht werden. Insbesondere kann die Haltevorrichtung automatisiert, bspw. elektrisch, pneumatisch oder hydraulisch steuerbar, betrieben werden.

Besonders günstig ist es, wenn die Kunststoffverbundplatte in zumindest einem Roboterarm der Haltevorrichtung aufgenommen wird. Der Roboterarm ist bevorzugt zur Bewegung der Kunststoffverbundplatte in allen drei Raumdimensionen ausgebildet. Hierfür kann der Roboterarm Schwenkachsen in den drei Raumdimensionen aufweisen. Bevorzugt weist der Roboterarm zumindest ein Greifwerkzeug, bspw. in Zangenform, zum Ergreifen der Kunststoffverbundplatte auf.

Wenn die Kunststoffverbundplatte mittels Fixierelementen in einem Rahmen der Haltevorrichtung aufgenommen wird, kann die Kunststoffverbundplatte zuverlässig im Rahmen gehalten werden. Beispielsweise kann die Kunststoffverbundplatte an ihrem Umfangsrand mit ersten Enden der Fixierelemente verbunden sein, und zweite Enden der Fixierelemente sind mit dem Rahmen verbunden. Der Rahmen kann die Kunststoffverbundplatte teilweise oder vollständig umgeben. Somit kann der Rahmen ergriffen werden, um die Kunststoffverbundplatte zu halten und zu transportieren.

Wenn die Fixierelemente dehnbar oder verschiebbar ausgebildet sind, dabei vorzugsweise nur an wenigen Positionen, beispielsweise den vier Ecken, die Kunststoffverbundplatte halten, kann die Position der Kunststoffverbundplatte im Rahmen während der Umformung der Kunststoffverbundplatte verändert werden. Das Material kann dadurch noch flexibler in die Form rutschen und das Ergebnis wird verbessert. Beispielsweise können die Fixierelemente Federelemente oder dgl. sein.

Die Erwärmung der Kunststoffverbundplatte kann besonders rasch, platzsparend und kostengünstig erfolgen, wenn die Kunststoffverbundplatte durch Infrarotstrahlung in der Erwärmungsvorrichtung erwärmt wird. Hierfür weist die Erwärmungsvorrichtung zumindest eine Quelle für Infrarotstrahlung auf.

Weiters kann vorgesehen sein, dass die Kunststoffverbundplatte in der Erwärmungsvorrichtung in unterschiedlichen Teilbereichen unterschiedlich intensiv erwärmt wird, da es üblicherweise einen Erweichungs-Temperatur-Bereich gibt. Je weicher das Material, desto einfacher ist eine Umformung in stark gekrümmten Bereichen. Für gerade Bereiche ist unter Umständen weniger Erweichung erforderlich oder sogar wünschenswert. Es kann auch die Kunststoffverbundplatte, sofern diese keine konstante Dicke aufweist, in dickeren Teilbereichen stärker erwärmt werden als in vergleichsweise dünneren Teilbereichen, um die Kunststoffverbundplatte in unterschiedlich dicken Teilbereichen gleich rasch auf die Erweichungs-Temperatur zu bringen. Ebenso kann die Kunststoffverbundplatte in stärker zu verformenden Teilbereichen stärker erwärmt werden als in vergleichsweise weniger oder überhaupt nicht zu verformenden Teilbereichen.

Um die in der Pressvorrichtung aufgenommene und gepresste Kunststoffverbundplatte rasch und vorzugsweise kontrolliert abkühlen zu können, kann die Kunststoffverbundplatte mittels einer vorzugsweise steuerbaren Temperiereinrichtung (Erwärmungs- und/oder Kühleinrichtung) der Pressvorrichtung abgekühlt werden. Beispielsweise kann die Pressvorrichtung, insbesondere zumindest eine der Pressformen, Kanäle zum Durchtritt eines Kühlfluids aufweisen. Zusätzlich oder alternativ sind Peltierelemente zur Kühlung der Kunststoffverbundplatte denkbar. Die Temperiereinrichtung kann elektrisch gesteuert werden.

Wenn die erste und/oder zweite Pressform mit Krümmungen der Pressfläche ausbildendem weicherem Material bereitgestellt wird, wird mittels des weicheren Materials der ersten und/oder zweiten Pressform eine Oberflächenkontur der Pressfläche erhalten. Demnach kann die Pressfläche Erhöhungen und/oder Vertiefungen aufweisen, welche der Kunststoffverbundplatte beim Pressen unterschiedlich stark ausgeprägte Toleranzbereiche zur Verfügung stellen können.

Dabei ist es günstig, wenn die erste und/oder zweite Pressform mit dem weicheren Material bereitgestellt wird, welches im Bereich der Krümmungen der Pressfläche dicker und/oder weicher als in einem vergleichsweise flachen Bereich der Pressfläche ausgebildet ist. Demnach kann der Druck auf gekrümmte Bereiche der Kunststoffverbundplatte abhängig von der Ausbildung und Anordnung des weicheren Materials geringer als auf vergleichsweise flache Bereiche der Kunststoffverbundplatte sein. Somit erhält die Kunststoffverbundplatte im Bereich der Krümmungen, d.h. im Bereich starker Umformungen, mehr Spielraum, um sich zu verformen, und es werden Schäden, wie sie im Fall von Pressformen die keinen Spielraum zur Verfügung stellen häufig auftreten, vermieden.

Vorzugsweise wird die erste und/oder zweite Pressform mit einer Schicht aus Silikon als weicheres Material bereitgestellt. Die Dicke und die Härte der Schicht aus Silikon bzw. des weicheren Materials kann entlang der Pressfläche variieren. Insbesondere kann die Dicke und die Härte der Schicht aus Silikon bzw. des weicheren Materials entlang der Pressfläche so eingestellt werden, dass beim Pressen der Kunststoffverbundplatte unterschiedlicher definierter Druck auf definierte Bereiche der Kunststoffverbundplatte ausgeübt wird.

Wenn mit dem erfindungsgemäßen Verfahren ein Behälter, insbesondere ein Koffer mit abgerundeten Ecken und/oder Kanten gefertigt wird, wird günstiger Weise der Kunststoffverbundplatte im Bereich der zu fertigenden Ecken und/oder Kanten mittels des weicheren Materials ein hinreichend großer Toleranzbereich für die Verformung der Kunststoffverbundplatte zur Verfügung gestellt.

Die erfindungsgemäße Aufgabe wird auch durch einen Behälter, insbesondere Koffer, mit zumindest einem halbschalenförmigen Bauteil gelöst, welcher mit dem zuvor definierten Verfahren hergestellt ist und eine Kunststoffverbundplatte aufweist, welche zumindest eine Fasermatte mit zumindest einem von Carbonfasern, Aramidfasern oder Glasfasern aufweist, welche Fasermatte in einer Matrix aus thermoplastischem Material gebunden ist, wobei die Schichtdicke des halbschalenförmigen Bauteils weniger als 3 mm, vorzugsweise weniger als 1 mm beträgt. Im Zusammenhang mit dem Behälter wird auch auf die obige Beschreibung des Herstellungsverfahrens verwiesen. Der Behälter kann insbesondere zwei mit dem beschriebenen Verfahren hergestellte halbschalenförmige Bauteile, bspw. einen Bodenteil und einen Deckelteil aufweisen, die über Scharniere, Reißverschlüsse und andere Verbindungselemente miteinander verbunden sind. Im Vergleich zu Behältern, die aus Carbonfasern in einem duroplastischen Bindemittel hergestellt sind, zeichnet sich der mit dem oben beschriebenen Verfahren hergestellte Behälter durch hohe Festigkeit und hohe Bruchdehnung bei geringem Gewicht aus.

Bevorzugt weist der halbschalenförmige Bauteil zumindest einfach gekrümmte, insbesondere abgerundete Ecken und/oder Kanten, insbesondere frei von zusätzlichen Verstärkungen oder Materialunterbrechungen, auf. Der Behälter, insbesondere Koffer, ist somit auch im Bereich von Krümmungen, d.h. im Bereich der zumindest einfach gekrümmten (abgerundeten) Ecken und/oder Kanten, stabil und einteilig gefertigt.

Wesentlich für die Herstellung des Behälters, insbesondere Koffers ist, dass eine flache Kunststoffverbundplatte in komplexere dreidimensionale Geometrien umgeformt wird. Dabei ist es ein Ziel, der Kunststoffverbundplatte keine feste Form zwingend vorzugeben, sondern ihr insbesondere im Bereich der Kofferecken etwas Spielraum bei der dreidimensionalen Formfindung zu überlassen. Hierfür ist das weichere Material der Pressform wesentlich.

Die Durchführung des oben beschriebenen Verfahrens erfolgt mit einer Vorrichtung zur Herstellung eines zumindest abschnittsweise gekrümmten Bauteils aus einer Kunststoffverbundplatte durch Pressen, welche Kunststoffverbundplatte zumindest eine Fasermatte mit zumindest einem von Carbonfasern, Aramidfasern oder Glasfasern aufweist, welche Fasermatte in einer Matrix aus thermoplastischem Material gebunden ist, mit einer eine erste Pressform und eine darauf zu und davon weg bewegbare zweite Pressform aufweisenden Pressvorrichtung, welche Pressformen einander zugewandte, beim Pressen zur Anlage an der Kunststoffverbundplatte vorgesehene Pressflächen aufweisen, wobei eine von der Pressvorrichtung getrennte Erwärmungsvorrichtung zur Erwärmung der Kunststoffverbundplatte vorgesehen ist, die erste und zweite Pressform Materialien unterschiedlicher Härte aufweisen und in zumindest einem Teilbereich der Pressfläche der ersten und/oder zweiten Pressform das weichere Material vorgesehen ist. Hinsichtlich der Vorrichtung zur Herstellung des Bauteils wird auch auf die vorangegangene Beschreibung des Verfahrens verwiesen.

Unter Umständen kann das weichere Material Krümmungen, d.h. Erhöhungen und/oder Vertiefungen, der Pressfläche ausbilden.

Insbesondere kann das weichere Material unterschiedliche Dicke aufweisen.

Dabei kann das weichere Material im Bereich der Krümmungen der Pressfläche dicker oder härter und/oder weicher oder dünner als in einem vergleichsweise flachen Bereich der Pressfläche ausgebildet sein.

Günstiger Weise weisen die erste und die zweite Pressform Metall auf, wobei dann die Pressfläche einer der ersten oder zweiten Pressform das weichere Material aufweist.

Bevorzugt ist das weichere Material eine Schicht aus Silikon.

Weiters kann vorgesehen sein, dass die Pressvorrichtung zur Annäherung der ersten und zweiten Pressform zueinander bis auf weniger als 3 mm, vorzugsweise weniger als 1 mm ausgebildet ist.

Zudem kann eine der Erwärmungsvorrichtung und der Pressvorrichtung zugeordnete Haltevorrichtung für die Platte vorgesehen sein.

Die Haltevorrichtung kann zumindest einen Roboterarm zur Aufnahme der Kunststoffverbundplatte aufweisen.

Ergänzend oder alternativ kann die Haltevorrichtung einen Rahmen mit Fixierelementen zum Aufnehmen der Kunststoffverbundplatte im Rahmen aufweisen. Dabei können die Fixierelemente dehnbar ausgebildet sein.

Bevorzugt weist die Erwärmungsvorrichtung eine Infrarotheizung auf. Die Erwärmungsvorrichtung kann ausgebildet sein, die Kunststoffverbundplatte in unterschiedlichen Teilbereichen unterschiedlich stark zu erwärmen.

Die Pressvorrichtung kann eine vorzugsweise steuerbare, insbesondere elektrisch steuerbare Temperiereinrichtung (Erwärmungs- und/oder Kühleinrichtung) aufweisen.

Die Erfindung wird im Folgenden anhand von bevorzugten, nicht einschränkenden Ausführungsbeispielen unter Bezugnahme auf die Zeichnungen noch weiter erläutert. Es zeigen:
Fig. 1 eine Kunststoffverbundplatte mit mehreren Faserschichten in einer Matrix aus thermoplastischem Material in einer Schnittansicht;
Fig. 2 einen aus der Kunststoffverbundplatte von Fig. 1 hergestellten Bauteil in einer Schnittansicht;
Fig. 3 die Kunststoffverbundplatte von Fig. 1 in einer Erwärmungsvorrichtung;
Fig. 4 die Kunststoffverbundplatte von Fig. 1 in einem Rahmen einer Haltevorrichtung in einer Ansicht von oben;
Fig. 5 eine Pressvorrichtung mit einer ersten Pressform und einer darauf zu und davon weg bewegbaren zweiten Pressform, in einem geöffneten Zustand, und mit weicherem Material an der Pressfläche der zweiten Pressform in einer Schnittansicht;
Fig. 6 die Pressvorrichtung aus Fig. 5 mit der darin aufgenommenen Kunststoffverbundplatte von Fig. 1, in einem geschlossenen Zustand, während des Pressens;
Fig. 7 aufeinanderfolgende Schritte eines Verfahrens zur Herstellung eines zumindest abschnittsweise gekrümmten Bauteils aus der Kunststoffverbundplatte von Fig. 1;
Fig. 8 einen Behälter, insbesondere einen Koffer, im geöffneten Zustand, mit zwei halbschalenförmigen Bauteilen, welche mit dem erfindungsgemäßen Verfahren hergestellt wurden in einer Schnittansicht; und
Fig. 9 einen Behälter, insbesondere eine Kofferschale in zwei dreidimensionalen Ansichten, welche mit dem erfindungsgemäßen Verfahren hergestellt wurde.

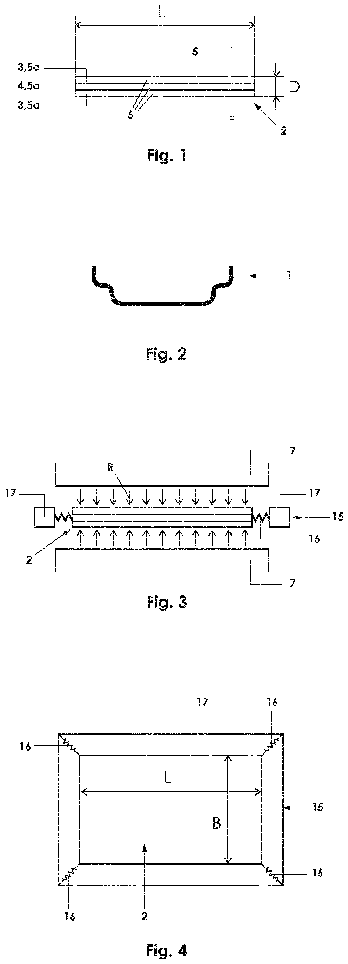

Fig. 1 zeigt eine Kunststoffverbundplatte 2, welche zumindest eine Fasermatte 5 mit zumindest einem von Carbonfasern, Aramidfasern oder Glasfasern aufweist, welche Fasermatte 5 in einer Matrix 6 aus thermoplastischem Material gebunden ist. Insbesondere zeigt Fig. 1 eine beispielhafte Kunststoffverbundplatte 2 mit einer Fasermatte 5 aus drei übereinander angeordneten Faserschichten 5a, wobei eine Aramidfaserschicht 4 zwischen zwei Carbonfaserschichten 3 angeordnet ist. Die Form der Kunststoffverbundplatte 2 kann prinzipiell beliebig sein. Insbesondere kann die Kunststoffverbundplatte 2 eckig, insbesondere rechteckig (vgl. Fig. 4) oder quadratisch, oder rund ausgebildet sein. In der dargestellten Ausführungsbeispielen weist die Kunststoffverbundplatte 2 eine Länge L, eine Breite B und eine Höhe oder Dicke D auf.

In Fig. 2 ist ein beispielhafter Bauteil 1 dargestellt, beispielsweise eine Halbschale eines Koffers, der durch Umformen aus der Kunststoffverbundplatte 2 erhalten wurde.

Fig. 3 zeigt schematisch ein Erwärmen der Kunststoffverbundplatte 2 mit einer Erwärmungsvorrichtung 7 auf eine Erweichungs-Temperatur. Hierfür kann die Kunststoffverbundplatte 2 in der Erwärmungsvorrichtung 7 aufgenommen sein. Im Beispiel gemäß Fig. 3 weist die Erwärmungsvorrichtung 7 eine Infrarotheizung auf, um die Kunststoffverbundplatte 2 mittels Infrarotstrahlung R zu erwärmen. Günstiger Weise wird die Kunststoffverbundplatte 2 an ihren beiden einander gegenüberliegenden Hauptflächen F (siehe Fig. 1) erwärmt.

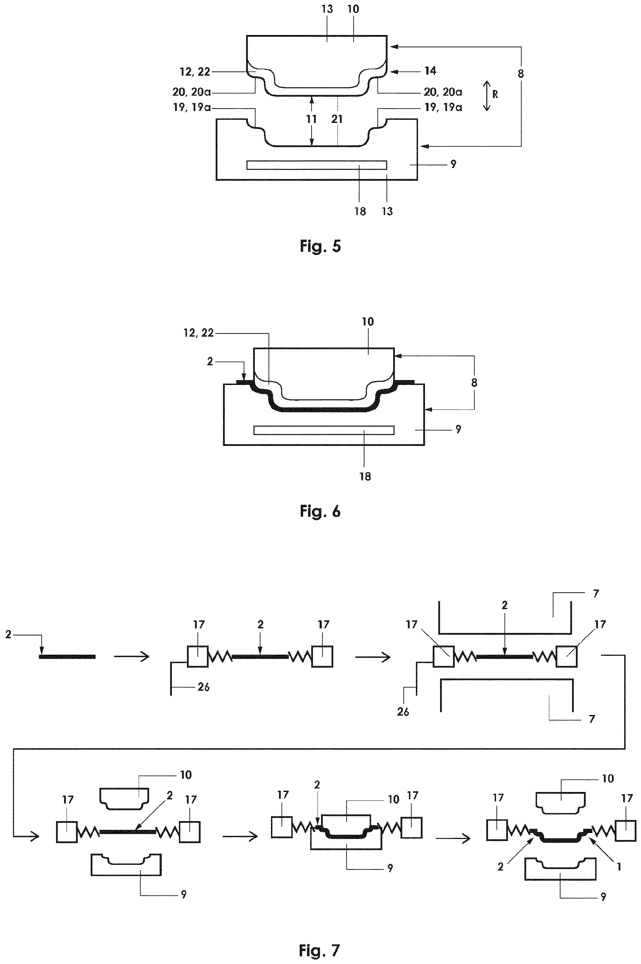

Wie in Fig. 4 symbolisch dargestellt ist, kann die Kunststoffverbundplatte 2 vor dem Erwärmen in einer Haltevorrichtung 15 aufgenommen und hiermit der Erwärmungsvorrichtung 7 und einer in den Fig. 5 und 6 dargestellten Pressvorrichtung 8 zugeführt werden. Dabei kann die Kunststoffverbundplatte 2 in zumindest einem Roboterarm 26 der Haltevorrichtung 15 aufgenommen werden. Die Kunststoffverbundplatte 2 kann zusätzlich oder alternativ mittels Fixierelementen 16 in einem Rahmen 17 der Haltevorrichtung 15 aufgenommen werden. Im in Fig. 7 dargestellten Beispiel ist erkennbar, dass die Kunststoffverbundplatte 2 im Rahmen 17 gehalten und dieser von einem Roboterarm 26 ergriffen ist. Alternativ kann der Roboterarm 26 oder können mehrere Roboterarme 26 die Kunststoffverbundplatte 2 direkt ergreifen. Die Fixierelemente 16 können elastisch bzw. dehnbar, beispielsweise in Form von Federelementen, ausgebildet sein.

Fig. 5 zeigt eine beispielhafte Pressvorrichtung 8 mit einer ersten Pressform 9 und einer darauf zu und davon weg bewegbaren zweiten Pressform 10. Die Bewegungsrichtung der beiden Pressformen 9, 10 zueinander und voneinander weg ist durch einen Doppelpfeil R angedeutet. Zum Herstellen des zumindest abschnittsweise gekrümmten Bauteils 1 aus der Kunststoffverbundplatte 2 wird die auf die Erweichungs-Temperatur erwärmte Kunststoffverbundplatte 2 zwischen der ersten Pressform 9 und der zweiten Pressform 10 der Pressvorrichtung 8 aufgenommen und gepresst. Die beiden Pressformen 9, 10 weisen einander zugewandte, beim Pressen zur Anlage an der Kunststoffverbundplatte 2 vorgesehene Pressflächen 11 auf. Zudem weisen die erste und zweite Pressform 9, 10 Materialien 12, 13 unterschiedlicher Härte auf. In zumindest einem Teilbereich 14 der Pressfläche 11 der ersten und/oder zweiten Pressform 9, 10 ist das weichere Material 12 vorgesehen. Insbesondere ist im Beispiel gemäß Fig. 5 erkennbar, dass die erste Pressform 9 das härtere Material 13 aufweist bzw. daraus gebildet ist und auch die zweite Pressform 10 das härtere Material 13 aufweist aber an der Pressfläche 11 zusätzlich das weichere Material 12 aufweist. In einer anderen nicht dargestellten Ausführungsform können sowohl die erste als auch die zweite Pressform 9, 10 sowohl das härtere Material 13 als auch an der Pressfläche 11 das weichere Material 12 aufweisen. Wesentlich ist, dass beim Pressen der Kunststoffverbundplatte 2 zumindest an einem Teil davon das weichere Material 12 anliegt und gegen die Kunststoffverbundplatte 2 drückt. Denkbar ist auch, dass die erste Pressform vollständig aus dem härteren Material 13 bspw. Metall und die zweite Pressform vollständig aus weicherem Material 12 hergestellt ist.

Fig. 6 zeigt die beispielhafte Pressvorrichtung 8 während des Pressens der zwischen der ersten Pressform 9 und der zweiten Pressform 10 aufgenommenen Kunststoffverbundplatte 2. Die in Pressung befindliche Kunststoffverbundplatte 2 nimmt dabei die durch die Pressflächen 11 vorgegebene Form an.

Die Fig. 5 und 6 zeigen zudem, dass die erste Pressform 9 und/oder die zweite Pressform 10, bspw. eine der Pressformen 9, 10, insbesondere die zweite Pressform 9, mit Krümmungen 19, 20 der Pressfläche 11 ausbildendem weicherem Material 12 bereitgestellt sind. Dabei weist im dargestellten Beispiel die Pressfläche 11 der ersten Pressform 9 aus dem härteren Material 13 Krümmungen 19 in Form von Erhöhungen 19a auf und die Pressfläche 11 der zweiten Pressform 10, welche Pressfläche 11 aus dem weicheren Material 12 gebildet ist, weist entsprechende Krümmungen 20 in Form von Vertiefungen 20a auf. Ebenso könnte die erste Pressform 9 das weichere Material 12 mit Erhöhungen 19a oder Vertiefungen 20a aufweisen. Insbesondere kann die erste Pressform 9 und/oder die zweite Pressform 10, bspw. eine der Pressformen 9, 10, insbesondere die zweite Pressform 9, mit dem weicheren Material 12 bereitgestellt sein, welches im Bereich der Krümmungen 19, 20 der Pressfläche 11 dicker und/oder weicher als in einem vergleichsweise flachen Bereich 21 der Pressfläche 11 ausgebildet ist. Die dickere und/oder weichere Ausbildung des weicheren Materials 12 stellt der Kunststoffverbundplatte 2 im Bereich der Krümmungen 19, 20 der Pressfläche 11 einen größeren Toleranzbereich für die Verformung zur Verfügung als im vergleichsweise flachen Bereich 21 der Pressfläche 11. Günstiger Weise kann die erste und/oder zweite Pressform 9, 10 mit einer Schicht 22 aus Silikon als weicheres Material 12 bereitgestellt sein.

In Fig. 6 ist weiters eine Temperiereinrichtung 18 der Pressvorrichtung 8 erkennbar, um die Kunststoffverbundplatte 2 mittels der Temperiereinrichtung 18, welche vorzugsweise steuerbar ausgebildet ist, aufheizen und abkühlen zu können. Dabei wird die in der Pressvorrichtung 8 aufgenommene und gepresste Kunststoffverbundplatte 2 zumindest auf eine Verfestigungs-Temperatur, welche geringer als die Erweichungs-Temperatur ist abgekühlt.

Nach dem Abkühlen der Kunststoffverbundplatte 2 wird die Pressvorrichtung 8 geöffnet, d.h. die erste Pressform 9 und die zweite Pressform 10 werden voneinander weg bewegt, und es wird die verfestigte zumindest abschnittsweise gekrümmte Kunststoffverbundplatte 2 als Bauteil 1 aus der Pressvorrichtung 8 entnommen.

In Fig. 7 sind aufeinanderfolgende, durch Pfeile getrennt dargestellte Schritte des Verfahrens zur Herstellung eines zumindest abschnittsweise gekrümmten Bauteils 1 aus der Kunststoffverbundplatte 2 erkennbar. Zunächst wird die im Wesentlichen starre d.h. für ein Auflegen auf eine Pressfläche 11 zu wenig flexible Kunststoffverbundplatte 2 bereitgestellt, dann wird die Kunststoffverbundplatte 2 in einer Haltevorrichtung 15, bspw. in einem Rahmen 17 und einem Roboterarm 26 aufgenommen, danach wird die in der Haltevorrichtung 15 aufgenommene Kunststoffverbundplatte 2 mit einer Erwärmungsvorrichtung 7 erwärmt, um geeignet in die Pressform 9, 10 eingelegt bzw. auf die Pressfläche 11 aufgelegt werden zu können, dann wird die erwärmte Kunststoffverbundplatte 2 zwischen den Pressformen 9, 10 der Pressvorrichtung 8 aufgenommen, woraufhin die Pressvorrichtung 8 geschlossen und die Kunststoffverbundplatte 2 in der Pressvorrichtung 8 gepresst und abgekühlt wird, um zu verfestigen, und schließlich wird die Pressvorrichtung 8 geöffnet und die Kunststoffverbundplatte 2 als Bauteil 1 aus der Pressvorrichtung 8 entnommen.

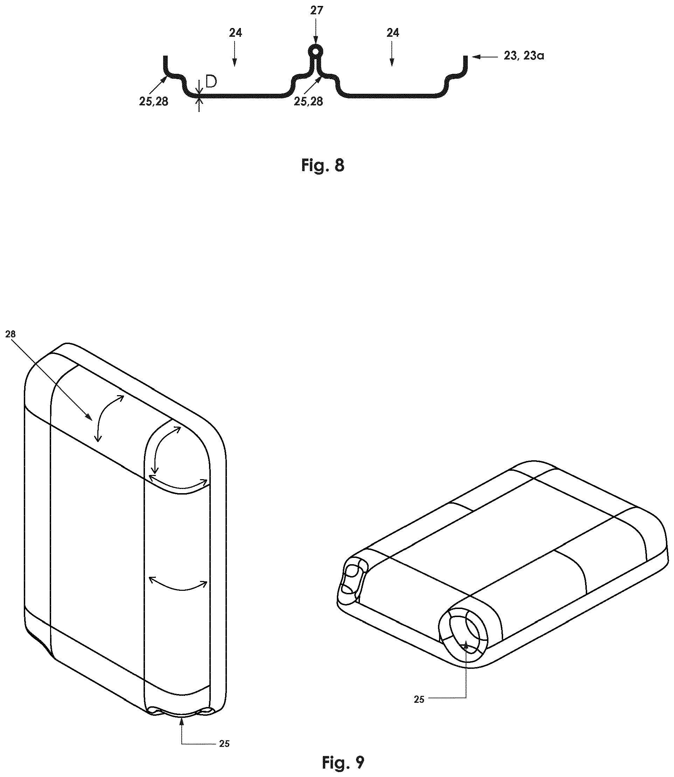

Fig. 8 zeigt einen beispielhaften Behälter 23, insbesondere einen Koffer 23a, mit zumindest einem halbschalenförmigen Bauteil 24, insbesondere zwei halbschalenförmigen Bauteilen 24, welcher Bauteil 24 / welche Bauteile 24 mit dem beschriebenen Verfahren hergestellt ist/sind und eine Kunststoffverbundplatte 2 aufweist/aufweisen, welche zumindest eine Fasermatte 5 mit zumindest einem von Carbonfasern, Aramidfasern oder Glasfasern aufweist, welche Fasermatte 5 in einer Matrix 6 aus thermoplastischem Material gebunden ist, wobei die Schichtdicke D des halbschalenförmigen Bauteils 24 / der halbschalenförmigen Bauteile 24 weniger als 3 mm, vorzugsweise weniger als 1 mm beträgt. Die Schichtdicke D des halbschalenförmigen Bauteils 24 ist im Wesentlichen die Dicke D der Kunststoffverbundplatte 2. Die halbschalenförmigen Bauteile 24 des gefertigten Koffers 23a, die bspw. einen Bodenteil und einen Deckelteil des Koffers bilden, sind beispielsweise mittels eines Scharniers 27 miteinander verbunden. Der halbschalenförmige Bauteil 24 weist bevorzugt mehrfach gekrümmte Ecken und/oder Kanten 25 und/oder einfach gekrümmte Ecken / Kanten 28auf.

Fig. 9 zeigt zwei dreidimensionale Ansichten eines halbschalenförmigen Bauteils 24, welcher sowohl über einfach gekrümmte Abschnitte "Kofferkanten" 28 als auch über zweifach gekrümmte Abschnitte "Kofferecken" 25 verfügt. Besonders zur Herstellung der zweifach gekrümmten Abschnitte ist die erfindungsgemäße Methode der Umformung vorteilhaft.

## Patentansprüche

1. Verfahren zur Herstellung eines zumindest abschnittsweise gekrümmten Bauteils (1) aus einer Kunststoffverbundplatte (2) durch Pressen, beinhaltend die Schritte:
• Bereitstellen einer Kunststoffverbundplatte (2), welche zumindest eine Fasermatte (5) mit zumindest einem von Carbonfasern, Aramidfasern oder Glasfasern aufweist, welche Fasermatte (5) in einer Matrix (6) aus thermoplastischem Material gebunden ist;
• Erwärmen der Kunststoffverbundplatte (2) mit einer Erwärmungsvorrichtung (7) auf eine Erweichungs-Temperatur;
• Aufnehmen und Pressen der auf die Erweichungs-Temperatur erwärmten Kunststoffverbundplatte (2) in einer Pressvorrichtung (8), zwischen einer ersten Pressform (9) der Pressvorrichtung (8) und einer darauf zu und davon weg bewegbaren zweiten Pressform (10) der Pressvorrichtung (8), wobei die Pressformen (9, 10) einander zugewandte, beim Pressen zur Anlage an der Kunststoffverbundplatte (2) vorgesehene Pressflächen (11) aufweisen, die erste und zweite Pressform (9, 10) Materialien (12, 13) unterschiedlicher Härte aufweisen und in zumindest einem Teilbereich (14) der Pressfläche (11) der ersten und/oder zweiten Pressform (9, 10) das weichere Material (12) vorgesehen ist;
• Abkühlen der in der Pressvorrichtung (8) aufgenommenen und gepressten Kunststoffverbundplatte (2) auf eine Verfestigungs-Temperatur, welche geringer als die Erweichungs-Temperatur ist; und
• Öffnen der Pressvorrichtung (8) und Entnehmen der verfestigten zumindest abschnittsweise gekrümmten Kunststoffverbundplatte (2) als Bauteil (1) aus der Pressvorrichtung (8).

2. Verfahren nach Anspruch 1, **dadurch gekennzeichnet, dass** die Kunststoffverbundplatte (2) mit einer Dicke (D) von weniger als 3 mm, vorzugsweise weniger als 1 mm bereitgestellt wird.

3. Verfahren nach Anspruch 1 oder 2, **dadurch gekennzeichnet, dass** die Kunststoffverbundplatte (2) vor dem Erwärmen in einer Haltevorrichtung (15) aufgenommen und hiermit der Erwärmungsvorrichtung (7) und der Pressvorrichtung (8) zugeführt wird.

4. Verfahren nach Anspruch 3, **dadurch gekennzeichnet, dass** die Kunststoffverbundplatte (2) in zumindest einem Roboterarm (26) der Haltevorrichtung (15) aufgenommen wird.

5. Verfahren nach Anspruch 3 oder 4, **dadurch gekennzeichnet, dass** die Kunststoffverbundplatte (2) mittels Fixierelementen (16) in einem Rahmen (17) der Haltevorrichtung (15) aufgenommen wird.

6. Verfahren nach Anspruch 5, **dadurch gekennzeichnet, dass** die Fixierelemente (16) dehnbar oder verschiebbar ausgebildet sind.

7. Verfahren nach einem der Ansprüche 1 bis 6, **dadurch gekennzeichnet, dass** die Kunststoffverbundplatte (2) durch Infrarotstrahlung (R) in der Erwärmungsvorrichtung (7) erwärmt wird.

8. Verfahren nach einem der Ansprüche 1 bis 7, **dadurch gekennzeichnet, dass** die Kunststoffverbundplatte (2) in der Erwärmungsvorrichtung (7) in unterschiedlichen Teilbereichen unterschiedlich stark erwärmt wird.

9. Verfahren nach einem der Ansprüche 1 bis 8, **dadurch gekennzeichnet, dass** die Kunststoffverbundplatte (2) mittels einer vorzugsweise steuerbaren Temperiereinrichtung (18) der Pressvorrichtung (8) erwärmt beziehungsweise abgekühlt wird.

10. Verfahren nach einem der Ansprüche 1 bis 9, **dadurch gekennzeichnet, dass** die erste und/oder zweite Pressform (9, 10) mit Krümmungen (19, 20) der Pressfläche (11) ausbildendem weicherem Material (12) bereitgestellt wird.

11. Verfahren nach Anspruch 10, **dadurch gekennzeichnet, dass** die erste und/oder zweite Pressform (9, 10) mit dem weicheren Material (12) bereitgestellt wird, welches im Bereich der Krümmungen (19, 20) der Pressfläche (11) dicker und/oder weicher als in einem vergleichsweise flachen Bereich (21) der Pressfläche (11) ausgebildet ist.

12. Verfahren nach einem der Ansprüche 1 bis 11, **dadurch gekennzeichnet, dass** die erste und/oder zweite Pressform (9, 10) mit einer Schicht (22) aus Silikon als weicheres Material (12) bereitgestellt wird.

13. Behälter (23), insbesondere Koffer (23a), mit zumindest einem halbschalenförmigen Bauteil (24), welcher mit einem Verfahren nach einem der Ansprüche 1 bis 12 hergestellt ist und eine Kunststoffverbundplatte (2) aufweist, welche zumindest eine Fasermatte (5) mit zumindest einem von Carbonfasern, Aramidfasern oder Glasfasern aufweist, welche Fasermatte (5) in einer Matrix (6) aus thermoplastischem Material gebunden ist, wobei die Schichtdicke (D) des halbschalenförmigen Bauteils (24) weniger als 3 mm, vorzugsweise weniger als 1 mm beträgt.

14. Behälter (23) nach Anspruch 13, **dadurch gekennzeichnet, dass** der halbschalenförmige Bauteil (24) zumindest einfach gekrümmte Ecken und/oder Kanten (28), aufweist.

15. Behälter (23) nach Anspruch 13, **dadurch gekennzeichnet, dass** der halbschalenförmige Bauteil (24) mehrfach gekrümmte Ecken und/oder Kanten (25) aufweist.
